# EUROPÄISCHE PATENTSCHRIFT

(11) **EP 1 213 508 B1**
(45) Veröffentlichungstag und Bekanntmachung des Hinweises auf die Patenterteilung: **09.11.2005**
(21) Anmeldenummer: 01128564.0
(22) Anmeldetag: 30.11.2001
(51) Int. Cl.: F16H 57/00, B60K 17/04, F16H 39/04

(54) **Getriebe mit Befestigungsvorrichtung für einen Hydrostaten**
Transmission with attachment device for hydrostatic transmission
Transmission avec dispositif de fixation pour transmission hydrostatique

(30) Priorität: 08.12.2000 US 733854
(43) Veröffentlichungstag der Anmeldung: 12.06.2002
(73) Patentinhaber: DEERE & COMPANY, Moline, Illinois 61265-8098 (US)
(72) Erfinder: Brody, Calvin Lynn, Denver, IA 50622 (US)
(74) Vertreter: Lau-Loskill, Philipp

(56) Entgegenhaltungen:
- DE-A- 4 235 728
- US-A- 5 295 414
- US-A- 5 345 839
- US-A- 6 138 980

## Beschreibung

Die Erfindung betrifft ein Getriebe mit einem Getriebegehäuse und einem darin angeordneten Hydrostaten, welcher ein Hydrostatgehäuse enthält, mit wenigsten zwei Montagestiften die den Hydrostaten im Getriebegehäuse abstützen und positionieren, wobei die Montagestifte jeweils einen Zapfenteil, der sich in eine Bohrung im Hydrostatgehäuse erstreckt, einen Außengewindeabschnitt, der in eine Gewindebohrung des Getriebegehäuses eindrehbar ist, um den Montagestift am Getriebegehäuse zu befestigen, und einen die Gewindebohrung umgebenden und sich über den Außengewindeabschnitt radial nach außen erstreckenden Flansch enthalten, der das Getriebegehäuse flächig aufliegend überlappt und dazu dient, die Einschraubtiefe des Außengewindeabschnitts in das Getriebegehäuse zu begrenzen, wobei der Zapfenteil sich in das Innere des Hydrostatgehäuses erstreckt und der Hydrostat im Getriebegehäuse abgestützt und positioniert wird.

Bei der Montage eines Hydrostaten innerhalb eines Getriebegehäuses ist es zweckmäßig, den Hydrostaten vom Getriebegehäuse zu isolieren um die Übertragung von Geräuschen und Vibrationen von dem Hydrostaten auf das Getriebegehäuse zu vermeiden. Eine Methode hierfür wird in der US-A-5,345,839, die als nächstliegender Stand der Technik angesehen wird, beschrieben, dem zufolge der Hydrostat auf quer zueinander beabstandeten Haltestäben gehalten wird. Die Haltestäbe erstrecken sich durch das Getriebegehäuse und werden von diesem abgestützt. An jedem der Stabenden ist zwischen dem Stab und dem Getriebegehäuse eine Gummilagerbuchse vorgesehen, um die vom Hydrostaten übertragenen Geräusche zu verringern.

Ein Nachteil dieser Ausführung besteht darin, dass die Haltestäbe zusätzlichen Platz innerhalb des gesamten Getriebegehäuseaufbaus benötigen. Des Weiteren sind am Hydrostaten Klemmkauschen angebracht, die an die Haltestangen angepasst und an diesen zu befestigen sind. Das Befestigen von Spannelementen an Haltestäben erfordert zusätzliche Bauteile und ist schwierig durchzuführen, da es innerhalb des Getriebegehäuses erfolgt.

Die US-A-6,138,980 offenbart Montagestifte, die zur Lagerung eines vibrierenden Bauteils innerhalb eines Getriebegehäuses dienen. Die Montagestifte sind an Montageöffnungen von außen am Getriebegehäuse montierbar und greifen in entsprechend am Bauteil ausgebildete Lagerbuchsen ein. Die Montagestifte sind mit Dämpfungsbuchsen überzogen, um das Bauteil vom Getriebegehäuse zu isolieren. Nachteilig wirkt sich aus, dass aufgrund konstruktiver Gegebenheiten eine Abdichtung der Montageöffnungen nicht vorgesehen ist.

Die der Erfindung zugrunde liegende Aufgabe wird zum einen darin gesehen, eine Befestigungsvorrichtung für einen Hydrostaten vorzuschlagen, die gleichwertige oder verbesserte Dämpfungscharakteristika für Geräusch und Vibration besitzt und gleichzeitig einen geringeren Platzbedarf aufweist. Des Weiteren soll es die Befestigungsvorrichtung ermöglichen, den Hydrostaten innerhalb des Getriebegehäuses zu montieren, ohne dass es für einen Monteur erforderlich ist, in das Innere des Getriebegehäuses zu fassen, um dort Befestigungselemente zu installieren oder zu befestigen. Ferner soll eine ausreichende Abdichtung der Befestigungsvorrichtung nach außen erfolgen.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß wird ein Getriebe der eingangs genannten Art derart ausgebildet, dass an den Montagestiften und dem Getriebegehäuse zwischen dem Außengewindeabschnitt und dem Flansch jeweils eine Ausnehmung vorgesehen ist, in der eine O-Ring-Dichtung aufnehmbar ist. Vorzugsweise ist die Ausnehmung an den Montagestiften als O-Ring-Nut zur Aufnahme des O-Rings ausgebildet. Der O-Ring dichtet das Getriebegehäuse gegen Leckagen und Verunreinigungen ab.

Vorzugsweise sind zwei Montagestifte auf jeder Seite des Getriebes vorgesehen, um den Hydrostaten innerhalb des Getriebegehäuses vollständig abzustützen und zu positionieren. Die Stifte haben eine Innenausnehmung, die dazu dient die Stifte in das Getriebegehäuse einzuschrauben. Durch die Ausbildung als Innenausnehmung wird der aus der Getriebeoberfläche herausragende Teil des Stiftes reduziert, wodurch die Unterbringung des Getriebes in einem begrenzten Bauraum der Fahrzeugstruktur erleichtert wird.

Anhand der Zeichnung, die zwei Ausführungsbeispiele der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: einen Ausschnitt eines erfindungsgemäß innerhalb eines Getriebegehäuses montierten Hydrostaten,
- Fig. 2: einen vergrößerten Ausschnitt einer Befestigungsvorrichtung des Hydrostaten und
- Fig. 3: einen vergrößerten Ausschnitt der Befestigungsvorrichtung des Hydrostaten, in dem eine alternative Ausführungsform eines Montagestiftes dargestellt wird.

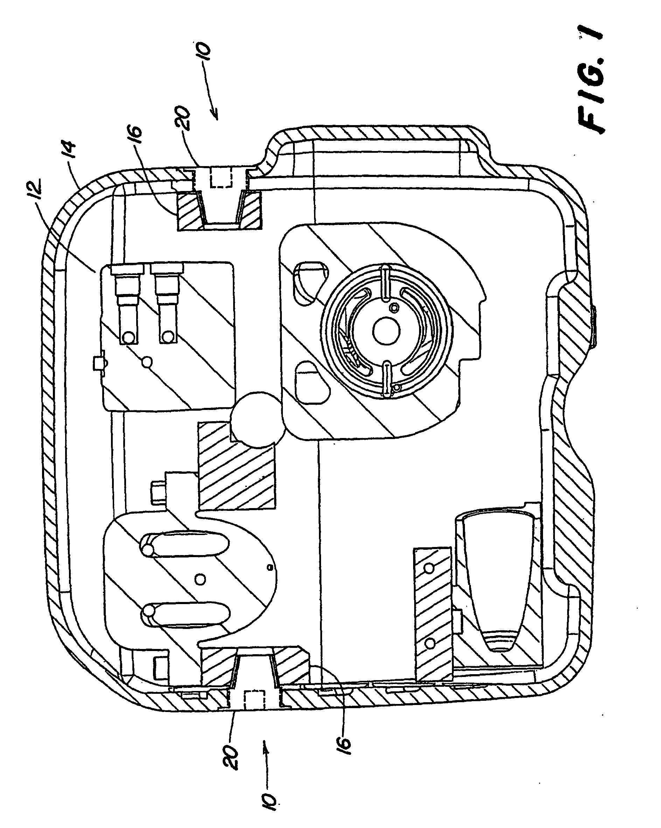

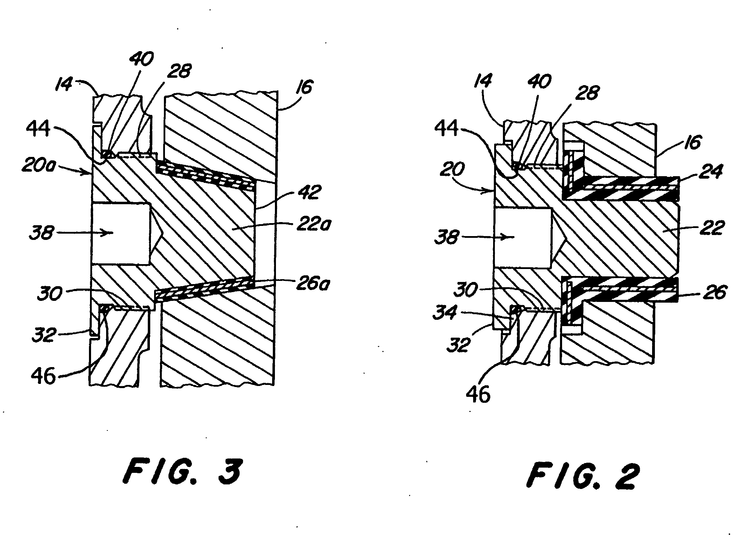

Die erfindungsgemäße Befestigungsvorrichtung 10 geht detailliert aus den Fig. 1 bis 3 hervor. Die Befestigungsvorrichtung 10 dient zur Befestigung eines Hydrostaten 12 innerhalb eines Getriebegehäuses 14. Der Hydrostat 12 enthält ein Hydrostatgehäuse 16, mit dem er an dem Getriebegehäuse 14 montiert ist. Die Befestigungsvorrichtung 10 besteht im Wesentlichen aus einem Montagestift 20 bzw. 20a. Der Montagestift 20 bzw. 20a ist detailliert in den Fig. 2 bzw. 3 vergrößert dargestellt.

Entsprechend Fig. 2 enthält der Montagestift 20 einen zylindrischen Zapfenteil 22, der sich in eine Bohrung 24 im Hydrostatgehäuse 16 erstreckt. Eine aus einem Gummi-Metallverbund bestehende Buchse 26 umschließt den Zapfenteil 22 und ist zwischen dem Zapfenteil 22 und dem Hydrostatgehäuse 16 angeordnet.

Der Montagestift 20 enthält des Weiteren einen außen liegenden Außengewindeabschnitt 28, der in eine Gewindebohrung 30 des Getriebegehäuses 14 eingeschraubt ist. Dadurch wird der Montagestift 20 an dem Getriebegehäuse 14 befestigt. Um die Einschraubtiefe des Montagestiftes 20 in das Getriebegehäuse 14 zu begrenzen, enthält der Montagestift 20 einen sich radial nach außen erstreckenden Flansch 32, der eine Außenfläche 34 des Getriebegehäuses 14, die die Gewindebohrung 30 umgibt, überlappt und mit dieser in Eingriff steht. Der Montagestift 20 ist mit einer sich nach innen erstreckenden Fassung 38 versehen, die so ausgebildet ist, dass sie ein Werkzeug zum Ein- bzw. Ausschrauben des Montagestiftes 20 in das Getriebegehäuse 14 aufnehmen kann.

Zur Aufnahme eines O-Rings 40 ist an dem Montagestift 20 und dem Getriebegehäuse 14 zwischen dem Außengewindeabschnitt 28 und dem Flansch 32 jeweils mit einer Ausnehmung 44, 46 ausgebildet. Der O-Ring 40 dient als Dichtung, um Leckagen des Getriebegehäuses 14 und das Eindringen von Verunreinigungen in das Getriebegehäuse 14 zu verhindern.

Ein alternatives Ausführungsbeispiel eines Montagestiftes 20a ist in Fig. 3 dargestellt. Der Montagestift 20a enthält einen konisch ausgebildeten Zapfenteil 22a, der zu einem Zapfenende 42 hin kegelförmig zuläuft. Eine konisch ausgebildete Buchse 26a umschließt den Zapfenteil 22a. Der konisch ausgebildete Zapfenteil 22a ermöglicht eine präzisere drei-dimensionale Positionierung des Hydrostaten 12 im Getriebegehäuse 14, ist jedoch schwieriger herzustellen.

Bei der Befestigungsvorrichtung 10 der vorliegenden Erfindung werden beidseitig des Getriebegehäuses 14 bzw. des Hydrostaten 12 zwei Montagestifte 20 bzw. 20a verwendet, wobei in beiden Ausführungsbeispielen der Hydrostat 12 relativ zum Getriebegehäuse 14 abgestützt und positioniert wird. Die Verwendung von elastischen Buchsen 26 bzw. 26a zwischen dem Montagestift 20 bzw. 20a und dem Hydrostaten 12 reduziert Geräusche und Vibrationen, die vom Hydrostaten 12 übertragen werden. Die Montagestifte 20 bzw. 20a der vorliegenden Erfindung ermöglichen das Einbauen des Hydrostaten 12 in das Getriebegehäuse 14 bei bereits in die Bohrungen 30 des Hydrostaten 12 eingesetzten Buchsen 26 bzw. 26a. Sobald der Hydrostat 12 positioniert ist, werden die Montagestifte 20 bzw. 20a in die Gewindebohrungen 30 geschraubt, um die Zapfenteile 22 bzw. 22a in die Buchsen 26 bzw. 26a einzuführen.

Auch wenn die Erfindung lediglich anhand der vorhergehenden Ausführungsbeispiele beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen.

## Patentansprüche

1. Getriebe mit einem Getriebegehäuse (14) und einem darin angeordneten Hydrostaten (12), welcher ein Hydrostatgehäuse (16) enthält, mit wenigsten zwei Montagestiften (20, 20a), die den Hydrostaten (12) im Getriebegehäuse (14) abstützen und positionieren, wobei die Montagestifte (20, 20a) jeweils einen Zapfenteil (22, 22a), der sich in eine Bohrung (24) im Hydrostatgehäuse (16) erstreckt, einen Außengewindeabschnitt (28), der in eine Gewindebohrung (30) des Getriebegehäuses (14) eindrehbar ist, um den Montagestift (20, 20a) am Getriebegehäuse (14) zu befestigen, und einen die Gewindebohrung (30) umgebenden und sich über den Außengewindeabschnitt (28) radial nach außen erstreckenden Flansch (32) enthalten, der das Getriebegehäuse (14) flächig aufliegend überlappt und dazu dient, die Einschraubtiefe des Außengewindeabschnitts (28) in das Getriebegehäuse (14) zu begrenzen, wobei der Zapfenteil (22, 22a) sich in das Innere des Hydrostatgehäuses (16) erstreckt und der Hydrostat (12) im Getriebegehäuse (14) abgestützt und positioniert wird, wobei an den Montagestiften (20, 20a) und dem Getriebegehäuse (14) zwischen dem Außengewindeabschnitt (28) und dem Flansch (32) jeweils eine Ausnehmung (44, 46) ausgebildet ist, in der eine O-Ring-Dichtung (40) aufnehmbar ist.

2. Getriebe nach Anspruch 1, **dadurch gekennzeichnet, dass** wenigstens eine elastische Buchse (26, 26a) vorgesehen ist, die das Zapfenteil (22, 22a) umschließt und zwischen dem Zapfenteil (22, 22a) und dem Hydrostatgehäuse (16) angeordnet ist.

3. Getriebe nach Anspruch 1 oder 2, **dadurch gekennzeichnet, dass** das Zapfenteil (22) im Wesentlichen zylindrisch ausgebildet ist.

4. Getriebe nach Anspruch 1 oder 2, **dadurch gekennzeichnet, dass** das Zapfenteil (22a) im wesentlichen konisch ausgebildet ist.

## Claims

1. A transmission with a transmission housing (14) and a hydrostatic unit (12) arranged therein, which includes a hydrostatic unit housing (16), with at least two mounting pins (20, 20a) which support and position the hydrostatic unit (12) in the transmission housing (14), wherein the mounting pins (20, 20a) each have a stud part (22, 22a) which extends into a bore (24) in the hydrostatic unit housing (16), an externally threaded section (28) which can be screwed into a threaded bore (30) in the transmission housing (14), in order to fix the mounting pin (20, 20a) in the transmission housing (14), and a flange (32) surrounding the threaded bore (30), extending radially outwards beyond the externally threaded section (28) and overlapping the transmission housing (14), lying flat against it, and serving to limit the depth to which the threaded section (28) is screwed into the transmission housing (14), whereby the stud part (22, 22a) extends into the interior of the hydrostatic unit housing (16) and the hydrostatic unit (12) is supported and positioned in the transmission housing (14), wherein a recess (44, 46) is formed in the mounting pins (20, 20a) and in the transmission housing (14) between the externally threaded section (28) and the flange (32), in which an O-ring seal (40) can be received.

2. A transmission according to claim 1, **characterized in that** at least one elastic bush (26, 26a) is provided and surrounds the stud part (22, 22a) and is arranged between the stud part (22, 22a) and the hydrostatic unit housing (16).

3. A transmission according to claim 1 or 2, **characterized in that** the stud part (22) is formed substantially cylindrically.

4. A transmission according to claim 1 or 2, **characterized in that** the stud part (22a) is formed substantially conically.

## Revendications

1. Transmission, du type comprenant un carter de transmission (14) et une transmission hydrostatique (12) installée à l'intérieur de celui-ci et comportant un carter de transmission hydrostatique (16) présentant au moins deux chevilles de montage (20, 20a) qui assurent l'appui et le positionnement de transmission hydrostatique (12) dans le carter de transmission (14), les chevilles de montage (20, 20a) comportant chacune une portion formant bouchon (22, 22a) s'étendant dans un alésage (24) du carter de transmission hydrostatique (16), une portion à filetage extérieur (28), qui peut être vissée par rotation dans un alésage fileté (30) du carter de transmission (14) en vue de la fixation des chevilles de montage (20, 20a) au carter de transmission (14), et un rebord (32) entourant l'alésage fileté (30) et s'étendant radialement vers l'extérieur au-delà de la portion à filetage extérieur (28) en s'appliquant superficiellement par-dessus le carter de transmission (14), en servant ainsi à délimiter la profondeur de vissage de la portion à filetage extérieur (28) dans le carter de transmission (14), la portion formant bouchon (22, 22a) pénétrant dans l'intérieur du carter de transmission hydrostatique (16) et assurant l'appui et le positionnement de transmission hydrostatique (12) dans le carter de transmission (14), sur chacune des chevilles de montage (20, 20a) et sur le carter de transmission (14) étant créé, entre la portion à filetage extérieur (28) et le rebord (32), un évidement (44, 46) dans lequel peut être accueilli un joint annulaire en O.

2. Transmission selon la revendication 1, **caractérisée en ce qu'**il est prévu au moins une douille élastique (26, 26a) qui enveloppe la portion formant bouchon (22, 22a), et qui est disposée entre la portion formant bouchon (22, 22a) et le carter de transmission hydrostatique (16).

3. Transmission selon la revendication 1 ou 2, **caractérisée en ce que** la portion formant bouchon (22) a une forme pratiquement cylindrique.

4. Transmission selon la revendication 1 ou 2, **caractérisée en ce que** la portion formant bouchon (22a) a une forme pratiquement conique.
